# EUROPÄISCHE PATENTSCHRIFT

(11) **EP 3 535 154 B1**
(45) Veröffentlichungstag und Bekanntmachung des Hinweises auf die Patenterteilung: **09.09.2020**
(21) Anmeldenummer: 17780684.1
(22) Anmeldetag: 28.09.2017
(51) Int. Cl.: B60K 35/00, B60K 37/06, G01C 21/36, G06F 3/0488, G06F 3/0484

(54) **ANORDNUNG EINER GRAFISCHEN BENUTZERSCHNITTSTELLE IN EINEM FAHRZEUG UND VERFAHREN ZUM BEREITSTELLEN EINER GRAFISCHEN BENUTZERSCHNITTSTELLE IN EINEM FAHRZEUG**
ASSEMBLY OF A GRAPHICAL USER INTERFACE IN A VEHICLE, AND METHOD FOR PROVIDING A GRAPHICAL USER INTERFACE IN A VEHICLE
AGENCEMENT D'UNE INTERFACE UTILISATEUR GRAPHIQUE DANS UN VÉHICULE ET PROCÉDÉ DE RÉALISATION D'UNE INTERFACE UTILISATEUR GRAPHIQUE DANS UN VÉHICULE

(30) Priorität: 04.11.2016 DE 102016121107
(43) Veröffentlichungstag der Anmeldung: 11.09.2019
(73) Patentinhaber: Volkswagen Aktiengesellschaft, 38440 Wolfsburg (DE)
(72) Erfinder: MEJIA GONZALEZ, Maria Esther, 94063 Redwood City (CA); WENGELNIK, Heino, 38442 Wolfsburg (DE); KOEGLER, Indra Lena, 10829 Berlin (DE); ALTHOFF, Frank, 31275 Lehrte (DE)
(74) Vertreter: Reitstötter Kinzebach
(86) Internationale Anmeldenummer: PCT/EP2017/074688
(87) Internationale Veröffentlichungsnummer: WO 2018/082847

(56) Entgegenhaltungen:
- DE-A1-102009 059 866
- DE-A1-102013 114 794
- DE-A1-102014 222 980
- US-A1- 2008 211 779

## Beschreibung

Die vorliegende Erfindung betrifft eine Anordnung einer grafischen Benutzerschnittstelle in einem Fahrzeug sowie ein Verfahren zum Bereitstellen einer grafischen Benutzerschnittstelle in einem Fahrzeug mit einem Fahrzeugsitz, einem Touchscreen und einer Steuereinheit.

Die Verwendung einer Fülle elektronischer Einrichtungen in modernen Fahrzeugen führt zu einem großen Bedarf an Möglichkeiten, Informationen anzuzeigen und dem Nutzer eine Bedienung zu ermöglichen. Dies erfolgt insbesondere mithilfe von Touchscreens, die mittlerweile aufgrund von sinkenden Kosten und Fortschritten bei der technischen Entwicklung zunehmend größer dimensioniert werden. Sie erlauben nicht nur die Ausgabe von Daten für verschiedene Einrichtungen des Fahrzeugs, sondern auch deren Steuerung durch die Erfassung von Nutzereingaben.

Beispielsweise werden, um verschiedene elektronische Einrichtungen bedienen zu können, vielfach Multifunktionsbediensysteme eingesetzt, welche eine oder mehrere Multifunktionsanzeigen und Bedienelemente umfassen, mit denen die Einrichtungen bedient werden können. Die Bedienung wird dabei durch die auf der Multifunktionsanzeige wiedergegebene Information unterstützt beziehungsweise geführt. Ferner kann über ein solches Bediensystem ausgewählt werden, welche Informationen auf der Multifunktionsanzeige angezeigt werden sollen. Ein solches Anzeigesystem ist aus der DE 10 2009 059 866 A1 bekannt.

Dabei stellt sich bei bekannten Systemen das Problem, die Vielzahl der darstellbaren Informationen und Bedienmöglichkeiten sinnvoll und übersichtlich gegliedert bereitzustellen. Der vorliegenden Erfindung liegt daher die Aufgabe zugrunde, eine Anordnung einer grafischen Benutzerschnittstelle in einem Fahrzeug und ein Verfahren zum Bereitstellen einer grafischen Benutzerschnittstelle in einem Fahrzeug bereitzustellen, durch die einem Nutzer die Erfassung von Ausgabedaten und die Bedienung elektronischer Einrichtungen besonders schnell und übersichtlich ermöglicht wird.

Erfindungsgemäß wird diese Aufgabe durch eine Anordnung mit den Merkmalen des Anspruchs 1 und ein Verfahren mit den Merkmalen des Anspruchs 12 gelöst. Vorteilhafte Ausgestaltungen und Weiterbildungen ergeben sich aus den abhängigen Ansprüchen.

Die erfindungsgemäße Anordnung einer grafischen Benutzerschnittstelle in einem Fahrzeug umfasst einen Fahrzeugsitz, dem ein Reichweitenbereich zugeordnet ist, einen Touchscreen, der relativ zu dem Fahrzeugsitz so im Fahrzeug angeordnet ist, dass ein erster Teilbereich des Touchscreens innerhalb des Reichweitenbereichs und ein zweiter Teilbereich außerhalb des Reichweitenbereichs angeordnet ist, sowie eine Steuereinheit, durch die eine virtuelle Bedienoberfläche mit einem Anwendungsbereich und einem Informationsbereich erzeugbar ist. Dabei ist die virtuelle Bedienoberfläche so auf dem Touchscreen ausgebbar, dass sich der Anwendungsbereich im Wesentlichen über den ersten Teilbereich des Touchscreens erstreckt und der Informationsbereich im Wesentlichen über den zweiten Teilbereich des Touchscreens erstreckt. Dabei ist bei der Ausgabe ein erster Ausschnitt der virtuellen Bedienoberfläche auf dem Touchscreen anzeigbar. Es ist eine Bedienhandlung erfassbar und in Abhängigkeit von der Bedienhandlung ist ein zweiter Ausschnitt der virtuellen Bedienoberfläche auf dem Touchscreen ausgebbar.

Dadurch wird die virtuelle Bedienoberfläche vorteilhafterweise so gebildet, dass bei der Ausgabe durch den Touchscreen auf eine eingeschränkte Bedienbarkeit aufgrund der Position relativ zu dem Fahrzeugsitz Rücksicht genommen wird. Dies ist insbesondere relevant für den Fahrer des Fahrzeugs, der typischerweise in seiner Bewegungsfreiheit besonders stark eingeschränkt ist, da seine hauptsächliche Aufmerksamkeit auf der Beobachtung des umliegenden Straßenverkehrs sowie der Steuerung des Fahrzeugs liegt.

Insbesondere ist dem Fahrzeugsitz eine Sitzposition zugeordnet und der Reichweitenbereich wird ausgehend von der Sitzposition definiert. Dabei kann beispielsweise davon ausgegangen werden, dass eine auf dem Fahrzeugsitz sitzende Person innerhalb eines bestimmten Radius mit einer Hand Bedienelemente von Einrichtungen des Fahrzeugs erreichen und betätigen kann. Insbesondere wird dabei auch berücksichtigt, dass sich der Reichweitenbereich nicht über einen beliebig großen Raumwinkel erstrecken kann, sondern beispielsweise anhand eines typischen Sichtfeldes der auf dem Fahrzeugsitz befindlichen Person gebildet ist. Beispielsweise werden dabei Bestimmungen berücksichtigt, die definieren, wie weit die Blickrichtung des Fahrzeugführers maximal von der geraden Fahrtrichtung abweichen darf.

Bei einer Weiterbildung der erfindungsgemäßen Anordnung ist daher der Touchscreen zwischen einem Fahrersitz und einem Beifahrersitz des Fahrzeugs angeordnet und der Reichweitenbereich ist anhand des Fahrersitzes bestimmbar. Die virtuelle Bedienoberfläche kann dadurch vorteilhafterweise auf die Bedienbarkeit durch den Fahrer optimiert erzeugt und ausgegeben werden.

Insbesondere kann der Reichweitenbereich anhand von Daten über die auf dem Fahrzeugsitz befindliche Person, insbesondere den Fahrzeugführer, gebildet werden. Dabei können beispielsweise Informationen über Mobilitätseinschränkungen oder eine Körpergröße berücksichtigt werden.

Zudem kann vorgesehen sein, dass der Touchscreen bei einem Fahrzeug mit dem Lenkrad auf der linken Fahrzeugseite (Linkslenker) rechts vom Lenkrad angeordnet ist. Umgekehrt kann der Touchscreen bei einem Fahrzeug mit dem Lenkrad auf der rechten Fahrzeugseite (Rechtslenker) links vom Lenkrad angeordnet sein.

Zudem kann eine Umschaltung vorgesehen sein, um festzulegen, von welchen Fahrzeugsitz ausgehend der Reichweitenbereich definiert werden soll, beispielsweise um die erfindungsgemäße Erzeugung der virtuellen Bedienoberfläche auf einen Passagier auf dem Beifahrersitz abzustimmen.

Der Touchscreen ist dabei auf an sich bekannter Art gebildet. Er umfasst eine Anzeigefläche, über der eine berührungsempfindliche Oberfläche angeordnet ist, mittels derer die Position einer Berührung eines Betätigungsobjekts detektiert werden kann. Insbesondere ist der Touchscreen zusammenhängend gebildet beziehungsweise weist eine zusammenhängende Anzeigefläche auf. Bei dem Betätigungsobjekt handelt es sich insbesondere um die Fingerspitze eines Nutzers. Die berührungsempfindliche Oberfläche kann beispielsweise als Folie gebildet sein, etwa als resistive Touchfolie, kapazitive Touchfolie oder piezoelektrische Folie. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei der bestimmten Position erfasst und einem auf der Anzeigefläche angezeigten grafischen Objekt zugeordnet werden. Des Weiteren kann die Dauer der Berührung bei einer Position oder innerhalb eines bestimmten Bereichs erfasst werden. Ferner können Gesten erfasst werden, insbesondere eine zeitliche Veränderung der Position der Berührung, etwa bei einer Wischgeste.

Die virtuelle Bedienoberfläche wird auf an sich bekannter Art gebildet. Als "Bedienoberfläche" im Sinne der Erfindung wird eine Darstellung für eine Mensch-Maschine-Schnittstelle bezeichnet. Dabei sind technische Einrichtungen mittels Steuerelementen bedienbar, wozu etwa Schaltflächen oder Symbole der Darstellung verwendet werden können. Insbesondere kann die Bedienoberfläche Schalt- und Bedienelemente umfassen, welche die Bedienung einer Funktionalität für einen Menschen erfassbar darstellen. Beispielsweise kann der Betrag eines Parameters dargestellt werden und seine Einstellung durch ein Einstellmenü visualisiert werden. Die Bedienoberfläche kann ferner Elemente zur Informationsanzeige umfassen und damit eine durch einen Menschen erfassbare und interpretierbare Ausgabe ermöglichen.

Bei der Erzeugung der virtuellen Bedienoberfläche werden insbesondere Grafikdaten erzeugt, bei deren Ausgabe durch die Anzeigefläche des Touchscreens grafische Objekte angezeigt werden. Insbesondere kann die Ausgabe in einem Teilbereich der Anzeigefläche erfolgen, beispielsweise innerhalb eines Anzeigefensters. Dabei kann die Anzeige auf der Anzeigefläche insbesondere weitere grafische Objekte fassen, die auch zusätzlich zu dem Ausschnitt der virtuellen Bedienoberfläche ausgegeben werden können.

Bei einer Ausbildung der Erfindung ist die virtuelle Bedienoberfläche als Startbildschirm (Homescreen) ausgebildet. Die virtuelle Bedienoberfläche kann in diesem Fall als Grundzustand der Anzeige verstanden werden, wobei insbesondere ein Bedienelement und/oder eine Bedienvorrichtung vorgesehen sein kann, durch die ausgehend von anderen Darstellungen direkt zu dem Startbildschirm gewechselt werden kann, und/oder der Startbildschirm kann beim Aktivieren der Steuereinheit, etwa beim Starten des Fahrzeugs, angezeigt werden. Die virtuelle Bedienoberfläche kann ferner als ein Menü ausgebildet sein, insbesondere als Menü zur Auswahl von Anwendungen, etwa anhand von Programmsymbolen.

Die virtuelle Bedienoberfläche ist dabei erfindungsgemäß so gebildet, dass sie zumindest einen ersten und einen zweiten Ausschnitt umfasst. Insbesondere wird die virtuelle Bedienoberfläche als zusammenhängende Fläche gebildet. Die Ausschnitte sind dabei Bereiche der virtuellen Bedienoberfläche, die getrennt voneinander angezeigt werden können, wobei die Anzeige in dem gleichen Bereich der Anzeigefläche des Touchscreens erfolgt. Die Ausschnitte sind dabei nicht identisch, können sich jedoch überschneiden. Beispielsweise sind die Ausschnitte nebeneinander entlang der Breite der virtuellen Bedienoberfläche angeordnet, wobei sie sich insbesondere überschneiden. Ein Wechsel zwischen dem ersten und dem zweiten ausgegebenen Ausschnitt erfolgt dabei durch eine Verschiebung der virtuellen Bedienoberfläche relativ zu der Anzeigefläche des Touchscreens, wobei sich der auf der Anzeigefläche ausgebbare Bereich der virtuellen Bedienoberfläche verschiebt.

Die Bedienhandlung, anhand derer der zweiter Ausschnitt ausgegeben wird, kann auf verschiedene an sich bekannte Weisen erfasst werden. Insbesondere umfasst die Bedienhandlung eine Wischgeste, durch die eine Verschiebung des Ausschnitts und/oder der virtuellen Bedienoberfläche relativ zu der Anzeigefläche des Touchscreens verdeutlicht wird. Alternativ oder zusätzlich kann als Bedienhandlung eine Betätigung eines Schaltelements oder einer weiteren Bedienvorrichtung erfasst werden.

Insbesondere unterscheiden sich die Abmessungen der virtuellen Bedienoberfläche und der Anzeigefläche des Touchscreens so, dass die virtuelle Bedienoberfläche nicht vollständig auf der Anzeigefläche ausgegeben werden kann. Beispielsweise weist die virtuelle Bedienoberfläche eine Breite auf, welche die Breite der Anzeigefläche übersteigt. Analog dazu kann die Ausdehnung der virtuellen Bedienoberfläche, insbesondere die Breite, die entsprechende Ausdehnung eines Bereichs der Anzeigefläche, der für die Ausgabe der virtuellen Bedienoberfläche genutzt wird, übersteigen.

Dabei ist insbesondere vorgesehen, dass der erste Ausschnitt der virtuellen Bedienoberfläche so gebildet wird, dass er zumindest einen Teilbereich des Informationsbereichs der virtuellen Bedienoberfläche umfasst. Ferner umfasst der erste Ausschnitt zumindest einen Teil des Anwendungsbereichs der virtuellen Bedienoberfläche. Auch der zweite Abschnitt kann zum Ende seinen Teilbereich des Informationsbereichs umfassen, es kann allerdings auch vorgesehen sein, dass der Informationsbereich nicht von dem zweiten Ausschnitt umfasst ist.

Erfindungsgemäß weist die virtuelle Bedienoberfläche einen Anwendungsbereich und einen Informationsbereich auf. Diese sind in verschiedenen Flächenbereichen der virtuellen Bedienoberfläche ausgebildet. Insbesondere erstrecken sich der Anwendungsbereich und der Informationsbereich jeweils über die gesamte Höhe der virtuellen Bedienoberfläche. Die Bereiche unterscheiden sich insbesondere durch die jeweils ausgegebenen Daten und Interaktionsmöglichkeiten für einen Nutzer.

Bei einer Ausbildung der Anordnung weist der Anwendungsbereich zumindest eine Schaltfläche auf, die einem Anwendungsprogramm zugeordnet ist. Dadurch kann vorteilhafterweise eine Interaktion eines Nutzers mit dem Anwendungsprogramm und gegebenenfalls den durch dieses gesteuerten Einrichtungen ermöglicht werden.

Das Anwendungsprogramm kann dabei auf an sich bekannte Weise durch eine Einrichtung des Fahrzeugs, insbesondere durch eine Steuereinheit ausgeführt werden. Insbesondere wird unter einem "Anwendungsprogramm" eine Folge maschinenlesbarer Anweisungen verstanden, die flüchtig oder nichtflüchtig gespeichert sind und bei deren Ausführung durch eine Steuereinheit, insbesondere mittels eines Prozessors, eine bestimmte Funktion bereitgestellt wird.

Unter einer "Schaltfläche" wird im Sinne der Erfindung ein Steuerelement einer grafischen Benutzerschnittstelle verstanden. Eine Schaltfläche unterscheidet sich von Elementen und Flächen zur reinen Informationsanzeige, sogenannten Anzeigeelementen beziehungsweise Anzeigeflächen, darin, dass sie auswählbar ist. Bei einer Auswahl einer Schaltfläche wird eine zugeordnete Funktion ausgeführt, insbesondere eine Funktion des zugeordneten Anwendungsprogramms. Die Funktion kann etwa zu einer Veränderung der Informationsanzeige führen, ferner können über die Schaltfläche Einrichtungen gesteuert werden, deren Bedienung von der Informationsanzeige unterstützt wird. Die Schaltflächen können somit herkömmliche mechanische Schalter ersetzen. Sie können beliebig für eine frei programmierbare Anzeigefläche erzeugt und von dieser angezeigt werden. Zusätzlich kann vorgesehen sein, dass mittels analoger Bedienelemente, etwa durch einen Schalter, einen Regler, eine Tastatur, eine Maus, ein Touchpad oder einen Joystick, Bedienhandlungen mit Bezug zu einem der Schaltfläche zugeordneten Anwendungsprogramm vorgenommen werden können.

Bei einer weiteren Ausbildung ist die zumindest eine Schaltfläche als Widget-Objekt ausgebildet. Unter einem "Widget-Objekt" wird im Sinne der Erfindung ein Objekt verstanden, welches grafisch auf der Anzeigefläche dargestellt wird und welches einer Anwendung zugeordnet ist, die zum Beispiel von einer Fahrzeugeinrichtung ausgeführt wird. Ein Widget-Objekt kann insbesondere in einem kleinen Bereich der Anzeigefläche Informationen einer Fahrzeugeinrichtung anzeigen, die laufend aktualisiert werden. Beispielsweise können von dem Widget-Objekt Routeninformationen eines Navigationssystems, aktuelle Meldungen zum Wetter, zum Straßenzustand und zum Verkehrszustand angezeigt werden sowie Informationen zu Multimedia- und/oder Kommunikationseinrichtungen des Fahrzeugs. Die Widget-Objekte werden insbesondere unabhängig vom weiteren Anzeigeinhalt der Anzeigefläche dargestellt. Erfolgt die Darstellung eines Widget-Objekts als Anzeigefenster, können auch grafische Objekte in dem Anzeigefenster wiederum Widget-Objekte sein. Dabei hat der Nutzer über das Anzeigefenster Zugang zu anderen Widget-Objekten.

Es kann vorgesehen sein, dass in dem Anwendungsbereich sogenannte Kacheln und/oder Anzeigefenster ausgebildet sind, wobei für diese und ähnliche Strukturen nachfolgend verallgemeinernd der Begriff "Kacheln" verwendet wird. Diese umfassen einen Bereich der Fläche der virtuellen Bedienoberfläche, insbesondere einen rechteckig ausgeprägten Bereich.

Innerhalb einer Kachel können Ausgabedaten und/oder Interaktionsmöglichkeiten eines zugeordneten Anwendungsprogramms dargestellt werden. Dabei können die Kacheln unterschiedliche Abmessungen aufweisen, wobei die Abmessungen und/oder Positionen fest vorgegeben oder veränderlich sein können. Das zugeordnete Anwendungsprogramm kann ebenfalls fest vorgegeben oder veränderlich sein, insbesondere anhand einer Eingabe eines Nutzers.

Insbesondere kann bei der erfindungsgemäßen Anordnung vorgesehen sein, dass in dem Informationsbereich keine Schaltflächen ausgebildet sind. Ferner kann vorgesehen sein, dass in dem Informationsbereich lediglich eine einzelne oder wenige Schaltflächen ausgebildet sind. Dabei kann zudem vorgesehen sein, dass eine Schaltfläche des Informationsbereich eine geringe Bedienbarkeit aufweist, die beispielsweise lediglich zu einer Veränderung der Gestaltung der Informationsausgabe dient. Beispielsweise kann vorgesehen sein, dass durch eine Benutzereingabe eine Veränderung einer bestimmten Informationsdarstellung, etwa durch Auswahl einer bestimmten Gestaltungsform, vorgenommen werden kann, während die dargestellte Information selbst nicht verändert werden kann.

Beispielsweise kann vorgesehen sein, dass das Aussehen einer dargestellten Uhr durch Auswahl einer bestimmten Gestaltungsform verändert werden kann, wobei die Art der angezeigten Informationen, nämlich die Uhrzeit, nicht verändert wird. Bei weiterreichenden Konfigurationsmöglichkeiten, wie sie im Anwendungsbereich ermöglicht werden können, könnte beispielsweise vorgesehen sein, dass statt der Uhrzeit ein Datum oder eine andere Informationen gezeigt wird.

In dem Informationsbereich kann ferner ein Widget-Objekt und/oder eine Kachel dargestellt werden, wobei insbesondere vorgesehen ist, dass hier lediglich eine Informationsausgabe erfolgt und/oder lediglich geringe Interaktionsmöglichkeiten bereitgestellt werden.

Bei einer Weiterbildung ist eine Auswahleingabe erfassbar und das der Schaltfläche zugeordnete Anwendungsprogramm ist auswählbar. Dadurch kann vorteilhafterweise ein Wechsel des der Schaltfläche zugeordneten Anwendungsprogramms vorgenommen werden. Beispielsweise kann eine Auswahl anhand eines Menüs vorgenommen werden. Dabei werden insbesondere die den Kacheln des Anwendungsbereichs zugeordneten Anwendungsprogramme ausgewählt und/oder eine angezeigte Informationsausgabe oder Interaktionsmöglichkeiten wird eingestellt. In einer weiteren Ausführung kann eine automatische Auswahl erfolgen, beispielsweise anhand eines bestimmten Kontextes, etwa wenn eine bestimmte Fahrsituation erfasst wurde.

Bei einer Ausbildung ist dem Informationsbereich eine Informationsfunktionalität zugeordnet, die anhand einer externen oder vorgegebenen Konfiguration gebildet wird. Dadurch kann vorteilhafterweise eine Ausgabe von spezifischen Ausgabedaten für einen Nutzer erfolgen.

Die Informationsfunktionalität kann beispielsweise ein Widget-Objekt umfassen, durch welches eine Informationsanzeige erfolgt. Insbesondere ist dabei keine Interaktionsmöglichkeit vorgesehen. Die Konfiguration kann dabei auf verschiedene, an sich bekannte Weise erfolgen und umfasst beispielsweise eine Zuordnung eines Anwendungsprogramms und/oder bestimmter Inhalte. Beispielsweise kann eine vorgegebene Konfiguration durch einen Hersteller, etwa des Fahrzeugs, der Anordnung oder einer Komponente der Anordnung, bereitgestellt werden. Ferner kann eine externe Konfiguration erfolgen, beispielsweise durch Empfangen der Konfiguration mittels einer datentechnischen Verbindung zu einer externen Einrichtung, beispielsweise einem Server.

In einer weiteren Ausbildung umfasst die dem Informationsbereich zugeordnete Informationsfunktionalität eine Uhr, einen Begrüßungstext, eine Darstellung eines Fahrzeugs und/oder eine Benachrichtigung, etwa eine Push-Mitteilung oder eine Benachrichtigung eines Anwendungsprogramms.

Bei einer Weiterbildung ist eine Nutzeridentifikation erfassbar und der Informationsbereich wird in Abhängigkeit von der Nutzeridentifikation erzeugt. Dadurch kann vorteilhafterweise eine Personalisierung des Informationsbereichs vorgenommen werden.

Die Nutzeridentifikation erfolgt dabei auf an sich bekannte Weise, beispielsweise durch eine Eingabe des Nutzers, durch einen Login, anhand einer Personenerkennung oder anhand einer erfassten Identifizierung, beispielsweise mittels eines Mobilgeräts des Nutzers oder eines Fahrzeugschlüssels. Anhand der Nutzeridentifikation kann dabei eine bestimmte Person oder die Zugehörigkeit zu einer bestimmten Personengruppe erfasst werden.

In einem weiteren Ausführungsbeispiel ist vorgesehen, dass alternativ oder zusätzlich der Anwendungsbereich in Abhängigkeit von der Nutzeridentifikation erzeugt wird.

Bei einer Weiterbildung umfasst der Informationsbereich eine Textnachricht mit einem Namen eines Nutzers, etwa eine Begrüßungsnachricht, eine Anzeige einer Uhrzeit und/oder eine Fahrzeugdarstellung. Insbesondere kann die Fahrzeugdarstellung Informationen über einen Status des Fahrzeugs umfassen. Dadurch kann vorteilhafterweise eine für den Nutzer des Fahrzeugs, insbesondere den Fahrzeugführer, personalisierte Ausgabe von relevanten Daten erfolgen.

Bei einer Ausbildung werden anhand der Nutzeridentifikation Ausgabedaten eines Anwendungsprogramms gebildet und der Informationsbereich umfasst eine Ausgabe der Ausgabedaten. Dadurch können vorteilhafterweise Daten des Anwendungsprogramms ausgegeben werden, die für eine spezifische Person oder Personengruppe ist.

Beispielsweise kann eine Ausgabe von Ausgabedaten eines elektronischen Kalenders erfolgen, beispielsweise ein Hinweis auf den nächsten anstehenden Termin. Ferner können Daten eines Anwendungsprogramms zum Empfang von Nachrichten ausgegeben werden, beispielsweise per SMS oder E-Mail, wobei etwa eine Nachricht mit einem Hinweis auf eine neue eingetroffene Nachricht angezeigt werden kann.

Bei einer weiteren Ausbildung sind der erste und der zweite Ausschnitt der virtuellen Bedienoberfläche so gebildet, dass alle Teilabschnitte des Anwendungsbereichs in dem ersten Teilbereich des Touchscreens anzeigbar sind. Dadurch kann vorteilhafterweise sichergestellt werden, dass verschiedene bedienbare Bereiche der virtuellen Bedienoberfläche in dem ersten Teilbereich innerhalb des Reichweitenbereichs ausgegeben werden können. Die Teilabschnitte des Anwendungsbereichs umfassen etwa sämtliche von dem Anwendungsbereich der virtuellen Bedienoberfläche umfassten bedienbaren Objekte. Wenn auch nicht alle Teilabschnitte gleichzeitig in dem Reichweitenbereich angezeigt werden können, insbesondere nicht gleichzeitig mit dem Informationsbereich, können doch durch einen geeigneten Wechsel zwischen den angezeigten Ausschnitten alle dargestellten Bereiche und insbesondere alle bedienbaren Elemente der grafischen Bedienoberfläche so ausgegeben werden, dass sich die bedienbaren Elemente in dem Reichweitenbereich befinden und so eine Bedienung ermöglicht wird.

Zum Beispiel kann vorgesehen sein, dass durch ein Verschieben des dargestellten Ausschnitts der virtuellen Bedienoberfläche für jeden Teilabschnitt des Anwendungsbereichs die Anzeige so erzeugt werden kann, dass sich der jeweilige Teilabschnitt innerhalb des Reichweitenbereichs befindet. Insbesondere können alle bedienbaren Elemente der virtuellen Bedienoberfläche bei zumindest einem der darstellbaren Ausschnitte innerhalb des Reichweitenbereichs ausgegeben werden.

Beispielsweise kann durch einen Wechsel von dem ersten zu dem zweiten Ausschnitt der Informationsbereich aus dem auf der Anzeigefläche dargestellten Ausschnitt heraus verschoben werden, sodass er nicht mehr oder nur teilweise sichtbar ist, während ein anderer Bereich der virtuellen Bedienoberfläche auf der anderen Seite in den Bereich der Anzeigefläche verschoben wird, sodass bei der Ausgabe des zweiten Ausschnitt ein zuvor nicht sichtbarer Bereich der virtuellen Bedienoberfläche dargestellt wird. Insbesondere wird dabei ein Teil des Anwendungsbereichs, der bei dem ersten Ausschnitt innerhalb des Reichweitenbereichs dargestellt wurde, nach außerhalb des Reichweitenbereichs verschoben.

Ferner kann vorgesehen sein, dass der Anwendungsbereich und der Informationsbereich der virtuellen Bedienoberfläche variabel erzeugt werden, beispielsweise wenn der Reichweitenbereich variabel ist. In diesem Fall kann beispielsweise bei einem größeren Reichweitenbereich ein vergrößerter Anwendungsbereich dargestellt werden, wobei entsprechend eine Verkleinerung des Informationsbereichs erfolgt. Ferner kann umgekehrt bei einem kleineren Reichweitenbereich der dargestellte Anwendungsbereich verkleinert und der Informationsbereich vergrößert gebildet werden.

Bei einer Weiterbildung können mehrere Ausschnitte vorgesehen sein, wobei ein Wechsel zwischen den ausgegebenen Ausschnitten in analoger Weise wie bei einem Wechsel zwischen dem ersten und dem zweiten Ausschnitt erfolgen kann.

Bei einer Ausbildung ist der zweite Ausschnitt der virtuellen Bedienoberfläche gegenüber dem ersten Ausschnitt verschoben. Dadurch kann vorteilhafterweise eine besonders intuitive Bedienung bereitgestellt werden. Die Verschiebung kann dabei in verschiedene Richtungen erfolgen, insbesondere in horizontaler oder vertikaler Richtung. Ferner kann vorgesehen sein, dass verschiedene Ausschnitte der virtuellen Bedienoberfläche darstellbar sind, bei denen eine Verschiebung in zwei Richtungen vorgenommen werden kann, um verschiedene Bereiche der virtuellen Bedienoberfläche auszugeben.

Die ausgebbaren Ausschnitte können dabei kontinuierlich gebildet sein, wobei in diesem Fall eine kontinuierliche Verschiebung entlang einer Richtung, beispielsweise entlang der Breitenerstreckung der virtuellen Bedienoberfläche, vorgenommen werden kann, beispielsweise proportional zu einer Länge einer Wischgeste. Alternativ oder zusätzlich können diskrete ausgebbare Ausschnitte definiert sein, wobei in diesem Fall lediglich bestimmte Bereiche der virtuellen Bedienoberfläche als Ausschnitte ausgebbar sind.

Zum Beispiel kann die virtuelle Bedienoberfläche mit zwei diskreten Ausschnitten definiert sein, wobei die gesamte Breite der virtuellen Bedienoberfläche nicht mehr als doppelt so breit ist wie die Breite der auf der Anzeigefläche des Touchscreens darstellbaren Anzeige. Die beiden diskreten Ausschnitte können dabei insbesondere den linken und rechten Bereich der virtuellen Bedienoberfläche umfassen. Bei einem Wechsel zwischen dem ersten und der zweiten Ausschnitt kann dabei eine kontinuierliche Verschiebung dargestellt werden.

Bei einer weiteren Ausbildung erstreckt sich der Informationsbereich über 1/3 bis 2/3 der Fläche des ersten Ausschnitts der virtuellen Bedienoberfläche, insbesondere über 1/3 bis 2/3 der Breite des ersten Ausschnitts. Dadurch kann vorteilhafterweise eine übersichtliche Ausnutzung der bei dem ersten Ausschnitt zur Verfügung stehenden Fläche für den Informationsbereich erreicht werden.

Bei dieser Ausbildung ist vorgesehen, dass der Informationsbereich von dem ersten Ausschnitt umfasst ist. Dabei kann zum Beispiel vorgesehen sein, dass beim Wechsel zu dem zweiten Ausschnitt eine seitliche Verschiebung der virtuellen Bedienoberfläche nach rechts vorgenommen wird, wobei je nach der Ausdehnung des Informationsbereichs und der Verschiebung der virtuellen Bedienoberfläche der Informationsbereich aus dem darstellbaren Bereich hinaus verschoben wird und zugleich ein weiterer Teil des Anwendungsbereichs in den darstellbaren Bereich hinein verschoben wird.

Bei einer weiteren Ausbildung weist die virtuelle Bedienoberfläche einen gemeinsamen Bereich auf, der von dem ersten und dem zweiten Ausschnitt umfasst ist. Dadurch kann vorteilhafterweise eine Überlappung der beiden Ausschnitte dargestellt und ein Zusammenhang der Ausschnitte verdeutlicht werden. Insbesondere ist der Überlappungsbereich von dem Anwendungsbereich umfasst. Er kann beispielsweise zwei Kacheln umfassen, die in einem mittleren Bereich der virtuellen Bedienoberfläche angeordnet sind. Insbesondere kann, wenn der Wechsel zwischen dem ersten und dem zweiten Ausschnitt durch eine Verschiebung erfolgt, der gemeinsame Bereich als mittlerer Bereich der virtuellen Bedienoberfläche ausgebildet sein, der bei dem ersten Ausschnitt auf einer ersten Seite und bei dem zweiten Ausschnitt auf der gegenüberliegenden Seite dargestellt wird.

Bei einer Weiterbildung ist eine Aktivierungshandlung für ein Anwendungsprogramm erfassbar und durch das Anwendungsprogramm erzeugbare Ausgabedaten sind in dem Anwendungsbereich ausgebbar. Insbesondere bleibt dabei der Informationsbereich unverändert oder die in dem Informationsbereich dargestellten Ausgabedaten werden in einem auf veränderte Weise gebildeten Informationsbereich dargestellt. Beispielsweise kann bei einem Aufruf eines Anwendungsprogramms in einer Vollbilddarstellung der gesamte Anwendungsbereich durch Ausgabedaten des Anwendungsprogramms eingenommen werden. Dabei kann vorgesehen sein, dass der Informationsbereich weiterhin wie bei der virtuellen Bedienoberfläche bestehen bleibt oder verändert wird, wobei beispielsweise Informationen in einer veränderten Anordnung angezeigt werden.

Das erfindungsgemäße Verfahren dient zum Bereitstellen einer grafischen Benutzerschnittstelle in einem Fahrzeug mit einem Fahrzeugsitz, einem Touchscreen und einer Steuereinheit. Bei dem Verfahren wird dem Fahrzeugsitz ein Reichweitenbereich zugeordnet und der Touchscreen ist relativ zu dem Fahrzeugsitz so angeordnet, dass ein erster Teilbereich des Touchscreens innerhalb des Reichweitenbereichs und ein zweiter Teilbereich außerhalb des Reichweitenbereichs angeordnet ist. Durch die Steuereinheit wird eine virtuelle Bedienoberfläche mit einem Anwendungsbereich und einem Informationsbereich erzeugt, wobei die virtuelle Bedienoberfläche so auf dem Touchscreen ausgegeben wird, dass sich der Anwendungsbereich im Wesentlichen über den ersten Teilbereich des Touchscreens erstreckt und der Informationsbereich im Wesentlichen über den zweiten Teilbereich des Touchscreens erstreckt. Bei der Ausgabe wird ein erster Ausschnitt der virtuellen Bedienoberfläche auf dem Touchscreen angezeigt, es wird eine Bedienhandlung erfasst und in Abhängigkeit von der Bedienhandlung wird ein zweiter Ausschnitt der virtuellen Bedienoberfläche auf dem Touchscreen ausgegeben.

Das erfindungsgemäße Verfahren ist insbesondere dazu ausgebildet, anhand der vorstehend beschriebenen erfindungsgemäßen Anordnung eine grafische Benutzerschnittstelle bereitzustellen. Das Verfahren weist somit dieselben Vorteile auf wie die erfindungsgemäße Anordnung.

Bei einer Weiterbildung des erfindungsgemäßen Verfahrens wird eine Nutzeridentifikation erfasst und der Informationsbereich wird in Abhängigkeit von der Nutzeridentifikation erzeugt. Dadurch kann vorteilhafterweise eine personalisierte Ausgabe bereitgestellt werden, insbesondere anhand einer Informationsfunktionalität, deren Ausgabedaten in dem Informationsbereich angezeigt werden.

Die Erfindung wird nun anhand von Ausführungsbeispielen mit Bezug zu den Zeichnungen erläutert.
- Figuren 1A und 1B: zeigen ein Ausführungsbeispiel der erfindungsgemäßen Anordnung in einem Fahrzeug,
- Figuren 2A bis 2C: zeigen ein Ausführungsbeispiel einer durch das erfindungsgemäße Verfahren erzeugten virtuellen Bedienoberfläche,
- Figuren 3A bis 3C: zeigen ein weiteres Ausführungsbeispiel einer durch das erfindungsgemäße Verfahren erzeugten virtuellen Bedienoberfläche,
- Figur 4: zeigt ein Ausführungsbeispiel eines angezeigten ersten Ausschnitts einer virtuellen Bedienoberfläche und
- Figur 5: zeigt ein Ausführungsbeispiel einer für die erfindungsgemäße Anordnung erzeugten Anzeige.

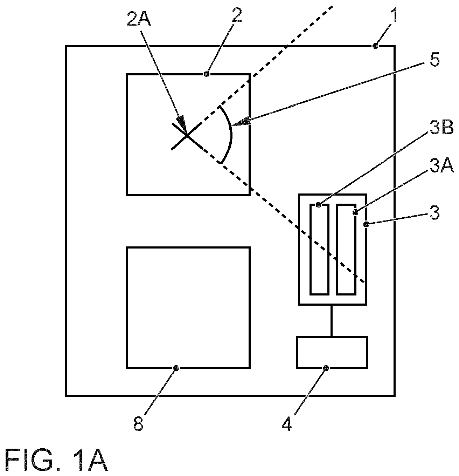

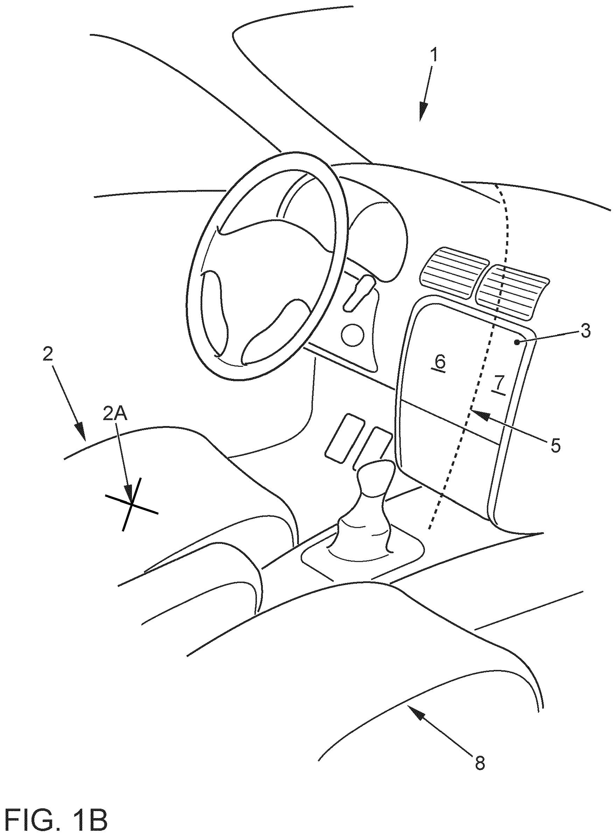

Mit Bezug zu den Figuren 1A und 1B wird ein Ausführungsbeispiel der erfindungsgemäßen Anordnung in einem Fahrzeug erläutert.

Ein Fahrzeug 1 umfasst einen Fahrersitz 2 und einen Beifahrersitz 8. Im Bereich des Fahrersitzes 2 ist eine Sitzposition 2a definiert, von der ausgehend ein Reichweitenbereich 5 durch gestrichelte Linien und einen Winkel angedeutet ist. Der Reichweitenbereich 5 ist bei dem Ausführungsbeispiel so definiert, dass ein auf dem Fahrersitz 2 sitzender Fahrer des Fahrzeugs 1 mit einer Hand ein Armaturenbrett des Fahrzeugs 1 innerhalb des Reichweitenbereichs 5 erreichen und dort Bedienhandlungen vornehmen kann.

Das Fahrzeug 1 umfasst ferner einen Touchscreen 3 mit einer Anzeigefläche 3a und einer berührungsempfindlichen Oberfläche 3b, die über der Anzeigefläche 3a angeordnet ist und durch die eine Position einer Berührung durch einen Finger des Fahrers erfasst werden kann. Dabei ist der Touchscreen 3 so angeordnet, dass ein erster Teilbereich 6 innerhalb des Reichweitenbereichs 5 und ein zweiter Teilbereich 7 außerhalb des Reichweitenbereichs 5 angeordnet ist. Das heißt, der auf dem Fahrersitz 2 sitzende Fahrer kann von seiner Sitzposition 2a aus problemlos den ersten Teilbereich 6 mit dem Finger erreichen und Bedienhandlungen vornehmen, während er den zweiten Teilbereich 7 nur durch Vorbeugen des Oberkörpers in Richtung des Touchscreens 3 erreichen kann. Bei der Definition des Reichweitenbereichs 5 wird ferner berücksichtigt, dass der Fahrer seinen Blick nur innerhalb eines bestimmten Bereichs von der Fahrtrichtung des Fahrzeugs 1 abwenden darf, um den umgebenden Verkehr zu beobachten und das Fahrzeug 1 zu steuern.

Mit dem Touchscreen 3 ist eine Steuereinheit 4 des Fahrzeugs 1 gekoppelt, durch die Grafikdaten an den Touchscreen 3 übertragen werden können, wo sie auf der Anzeigefläche 3a angezeigt werden. Ferner können durch die berührungsempfindliche Oberfläche 3b des Touchscreens 3 erfasste Daten an die Steuereinheit 4 übertragen werden.

In weiteren Ausführungsbeispielen sind weitere Bedienelemente vorgesehen, beispielsweise ein Schalter, einen Dreh-Drück-Steller, eine Tastatur, eine Maus, ein Joystick oder ein Touchpad, durch die eine Bedienung einer auf der Anzeigefläche 3a des Touchscreens 3 angezeigten grafischen Bedienoberfläche vorgenommen werden kann, insbesondere alternativ zur Bedienung anhand der berührungsempfindlichen Oberfläche 3b.

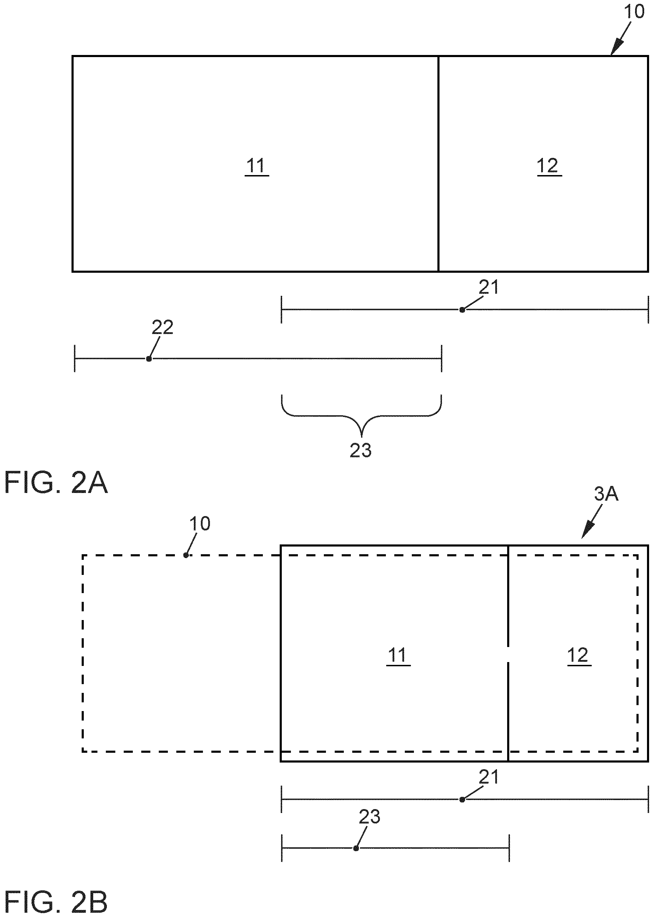

Mit Bezug zu den Figuren 2A bis 2C wird ein Ausführungsbeispiel einer durch das erfindungsgemäße Verfahren erzeugten virtuellen Bedienoberfläche erläutert. Dabei wird von dem oben mit Bezug zu den Figuren 1A und 1B erläuterten Ausführungsbeispiel der erfindungsgemäßen Anordnung in einem Fahrzeug ausgegangen.

Eine virtuelle Bedienoberfläche 10 wird durch die Steuereinheit 4 erzeugt und Grafikdaten der virtuellen Bedienoberfläche 10 werden an den Touchscreen 3 übertragen, wo sie durch die Anzeigefläche 3a ausgegeben werden. Die virtuelle Bedienoberfläche 10 umfasst einen Anwendungsbereich 11 und einen Informationsbereich 12. Ferner sind ein erster Ausschnitt 21 und ein zweiter Ausschnitt 22 definiert, wobei sich die beiden Ausschnitte 21, 22 jeweils über die gesamte Höhe der virtuellen Bedienoberfläche 10 erstrecken und anhand der Breitenerstreckung der virtuellen Bedienoberfläche 10 definiert sind. Die Ausschnitte 21, 22 sind überlappend angeordnet, sodass ein gemeinsamer Bereich 23 gebildet wird.

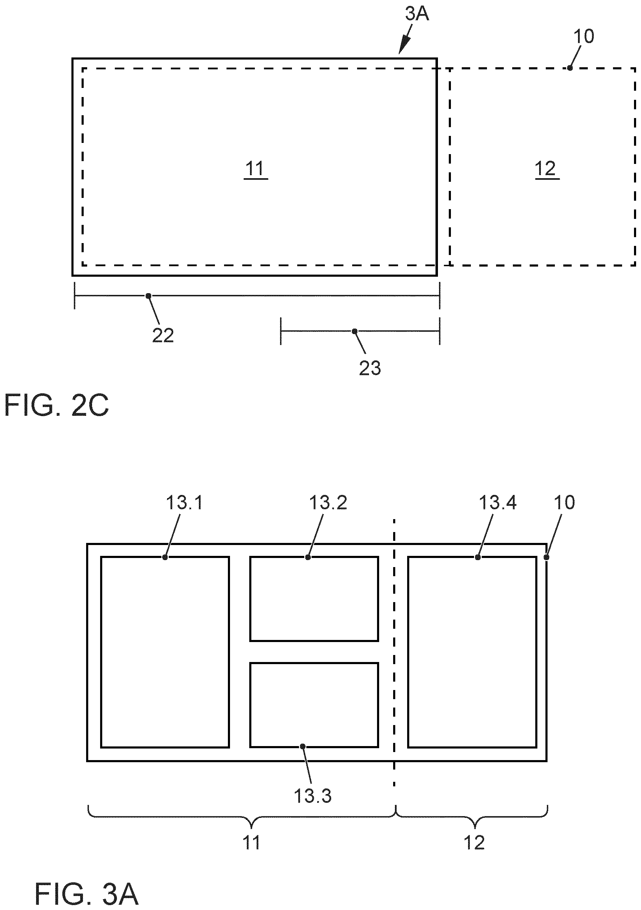

Bei dem in Figur 2B dargestellten Fall wird auf der Anzeigefläche 3a der erste Ausschnitt 21 angezeigt. Dieser umfasst den Informationsbereich 12 sowie den rechten Bereich des Anwendungsbereichs 11 der virtuellen Bedienoberfläche 10. Bei dem in Figur 2C dargestellten Fall ist die virtuelle Bedienoberfläche 10 gegenüber dem in Figur 2B dargestellten Fall nach rechts verschoben, sodass der Inflationsbereich 12 virtuellen Bedienoberfläche 10 nicht mehr sichtbar ist, sondern der Anwendungsbereich 11 die gesamte Anzeigefläche 3a ausfüllt. In einem weiteren Ausführungsbeispiel kann vorgesehen sein, dass der Inflationsbereich 12 so gebildet ist, dass er bei einem bestimmten Ausschnitt 21, 22 den gesamten Bereich der Anzeigefläche 3a ausfüllt, in dem der Ausschnitt 21, 22 der virtuellen Bedienoberfläche 10 ausgegeben wird.

Der Wechsel zwischen den dargestellten Ausschnitten 21, 22 wird bei dem Ausführungsbeispiel durch eine Wischgeste auf der berührungsempfindlichen Oberfläche 3b des Touchscreens in eine laterale Richtung ausgelöst. Insbesondere erfolgt der Wechsel von dem in Figur 2B dargestellten Fall zu dem in Figur 2C dargestellten Fall durch eine Wischgeste auf der berührungsempfindlichen Oberfläche 3b nach rechts, wobei die virtuelle Bedienoberfläche 10 nach rechts "gezogen" wird und eine kontinuierliche Bewegung von dem ersten 21 zum zweiten Ausschnitt 22 dargestellt wird. Der umgekehrte Wechsel erfolgt analog dazu durch eine Wischgeste von rechts nach links.

In weiteren Ausführungsbeispielen ist vorgesehen, dass der gemeinsame Bereich 23 größer oder kleiner ausgebildet ist als in dem Ausführungsbeispiel dargestellt. Insbesondere können die Ausschnitte 21, 22 der virtuellen Bedienoberfläche 10 so gebildet sein, dass sie aneinander angrenzen und sich nicht überlappen, sodass kein gemeinsamer Bereich 23 gebildet wird.

Bei weiteren Ausführungsbeispielen sind mehrere Ausschnitte der virtuellen Bedienoberfläche 10 ausgebbar. Insbesondere kann vorgesehen sein, dass die Verschiebung der virtuellen Bedienoberfläche 10 relativ zur Anzeigefläche 3a kontinuierlich erfolgt, wobei durch eine Bedienhandlung der auf der Anzeigefläche 3a ausgegebenen Ausschnitt genau entlang der Breitenerstreckung der virtuellen Bedienoberfläche 10 gewählt werden kann.

In weiteren Ausführungsbeispielen ist alternativ oder zusätzlich eine Verschiebung in vertikaler Richtung vorgesehen, sodass der auf der Anzeigefläche 3a ausgegebenen Ausschnitt der virtuellen Bedienoberfläche 10 auch entlang der Höhenerstreckung verschoben werden kann.

In weiteren Ausführungsbeispielen ist alternativ oder zusätzlich zur Bedienung mittels Wischgesten vorgesehen, dass ein Wechsel zwischen verschiedenen Ausschnitten 21, 22 der virtuellen Bedienoberfläche 10 durch ein Betätigen eines Bedienelements 9 ausgelöst wird. Das Bedienelement 9 kann dabei auf der Anzeigefläche 3a des Touchscreens 3angezeigt werden, wobei eine Betätigung anhand der berührungsempfindlichen Oberfläche 3b erfasst wird. Das Bedienelement 9 kann ferner mit analogen Mitteln ausgeführt werden, beispielsweise durch einen mechanischen Taster. Ferner kann eine Bedienung mittels Raumgesten ohne Berührung der berührungsempfindlichen Oberfläche 3b und/oder mittels Sprachsteuerung vorgesehen sein.

Mit Bezug zu den Figuren 3A bis 3C wird ein weiteres Ausführungsbeispiel einer durch das erfindungsgemäße Verfahren erzeugten virtuellen Bedienoberfläche erläutert. Dabei wird von dem oben mit Bezug zu den Figuren 1A und 1B erläuterten Ausführungsbeispiel der erfindungsgemäßen Anordnung in einem Fahrzeug ausgegangen. Ferner erfolgt die Erzeugung der virtuellen Bedienoberfläche analog zu dem mit Bezug zu den Figuren 2A bis 2C beschriebenen Ausführungsbeispiel des erfindungsgemäßen Verfahrens.

Die virtuelle Bedienoberfläche 10 umfasst einen Anwendungsbereich 11 und einen Informationsbereich 12. Teilbereiche der virtuellen Bedienoberfläche 10 sind als Widget-Objekte 13.1 bis 13.4 gebildet, denen verschiedene Anwendungsprogramme zugeordnet sind. Die Anwendungsprogramme werden durch die Steuereinheit 4 des Fahrzeugs 1 ausgeführt, wobei Ausgabedaten erzeugt werden, deren Ausgabe anhand der jeweils zugeordneten Widget-Objekte 13.1 bis 13.4 erfolgt. Bei anderen Ausführungsbeispielen umfassen der Anwendungsbereich 11 und der Informationsbereich 12 alternativ oder zusätzlich Anwendungsfenster und/oder andere an sich bekannte Strukturen zur Ausgabe von Ausgabedaten von Anwendungsprogrammen.

Bei einem weiteren Ausführungsbeispiel ist vorgesehen, dass in dem Informationsbereich 12 kein Widget-Objekt 13.4 angezeigt wird, sondern Ausgabedaten direkt auf der virtuellen Bedienoberfläche 10 angezeigt werden.

In einem weiteren Ausführungsbeispiel ist ferner vorgesehen, dass in dem Anwendungsbereich 11 Programmsymbole angezeigt werden, durch deren Auswahl jeweils ein zugeordnetes Anwendungsprogramm, insbesondere in einer Vollbilddarstellung, geöffnet werden kann. Die Programmsymbole sind dabei insbesondere als "Grid", das heißt an einem Raster, angeordnet.

Die Widget-Objekte 13.1 bis 13.3 des Anwendungsbereichs 11 werden so gebildet, dass einem Nutzer Informationen angezeigt und/oder Nutzereingaben erfasst werden können. Ferner ist vorgesehen, dass die Zuordnung der Anwendungsprogramme zu den Widget-Objekten 13.1 bis 13.3 durch eine Benutzereingabe verändert werden kann. Beispielsweise wird dabei eine Betätigung eines Bedienelements eines Widget-Objekts 13.1 bis 13 3 erfasst, ein Menü mit verschiedenen Anwendungsprogrammen angezeigt und eine Auswahl eines spezifischen Anwendungsprogramms erfasst. Die Auswahl des zugeordneten Anwendungsprogramms für ein Widget-Objekt 13.1 bis 13.3 kann auch auf andere an sich bekannte Weise erfolgen.

Ferner ist vorgesehen, dass der Informationsbereich 12 mit dem Widget-Objekt 13.4 eine fest vorgegebene Konfiguration aufweist. Diese Konfiguration wird bei dem Ausführungsbeispiel von dem Hersteller des Fahrzeugs 1 vorgegeben, sie kann allerdings bei anderen Ausführungsbeispielen auf andere Weise festgelegt sein. Insbesondere kann eine Updatemöglichkeit vorgesehen sein, bei der beispielsweise durch eine Aktualisierung einer Steuerungssoftware der Steuereinheit 4 die Konfiguration der Anzeige im Informationsbereich 12 vorgegeben wird.

Interaktionen und/oder Konfigurationseinstellungen eines Nutzers mit der dargestellten Anzeige der virtuellen Bedienoberfläche 10 im Informationsbereich 12 sind entweder nicht vorgesehen oder sehr geringem Umfang. Beispielweise kann vorgesehen sein, dass die Gestaltung einer Informationsausgabe, etwa das Format einer Ausgabe einer Uhrzeit, durch einen Nutzer konfigurierbar ist. Ferner kann eine Auswahl eines persönlichen Bildes und/oder Dekorelements durch einen Nutzer vorgesehen sein.

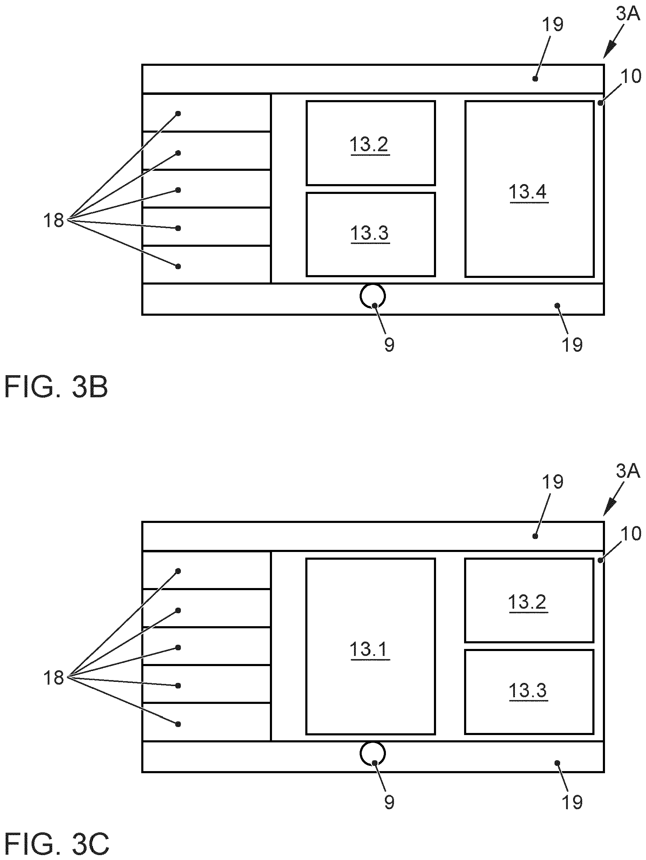

Die Figuren 3B und 3C zeigen zwei Fälle der Ausgabe der virtuellen Bedienoberfläche 10 auf der Anzeigefläche 3a. Auf der Anzeigefläche 3a werden Anzeigebereiche 19 am oberen und unteren Rand der Anzeigefläche 3a ausgegeben. Diese umfassen bei dem Ausführungsbeispiel Statusinformationen, beispielsweise einen Verbindungsstatus eines Mobilfunknetzwerks.

Ferner umfasst der untere Anzeigebereich 19 ein Bedienelement 9, dass auf an sich bekannte Weise als runde Schaltfläche ausgebildet ist. Durch Betätigen des Bedienelements 9 kann ein Nutzer eine Verschiebung der dargestellten virtuellen Bedienoberfläche 10 und damit einen Wechsel des ausgegebenen Ausschnitts bewirken. Auf der Anzeigefläche 3a werden ferner in einem seitlichen Bereich Schaltflächen 18 ausgegeben, die beispielsweise Anwendungen zur Einstellung bestimmter Einrichtungen des Fahrzeugs 1 zugeordnet sind, welche unabhängig von den im Bereich der virtuellen Bedienoberfläche 10 ausgegebenen Inhalten aufgerufen werden können.

Ferner ist vorgesehen, dass eine Wischgeste erfasst wird und der Wechsel zwischen dem ersten Ausschnitt 21 und dem zweiten Ausschnitt 22 in abhängig von der Wischgeste erfolgt. Zudem kann vorgesehen sein, dass ein Bedienelement 9 als analoger Schalter oder auf andere an sich bekannte Weise ausgeführt ist.

Bei dem in Figur 3B dargestellten Fall umfasst die Ausgabe auf der Anzeigefläche 3a einen ersten Ausschnitt der virtuellen Bedienoberfläche 10, wobei der Informationsbereich 12 mit dem Widget-Objekt 13.4 und der Anwendungsbereich 11 mit den Widget-Objekten 13.2 und 13.3 ausgegeben werden. Bei diesem Fall kann durch Betätigen des Bedienelements 9 dargestellten Ausschnitt der virtuellen Bedienoberfläche 10 verschoben werden, sodass ein nach links verschobener Ausschnitt der in Figur 3A dargestellten virtuellen Bedienoberfläche 10 auf der Anzeigefläche 3a ausgegeben wird. Dieser Fall ist in Figur 3C dargestellt, wobei der angezeigte Ausschnitt der virtuellen Bedienoberfläche 10 den Anwendungsbereich 11 mit den Widget-Objekten 13.1 bis 13.3 umfasst, während der Informationsbereich 12 nicht dargestellt wird.

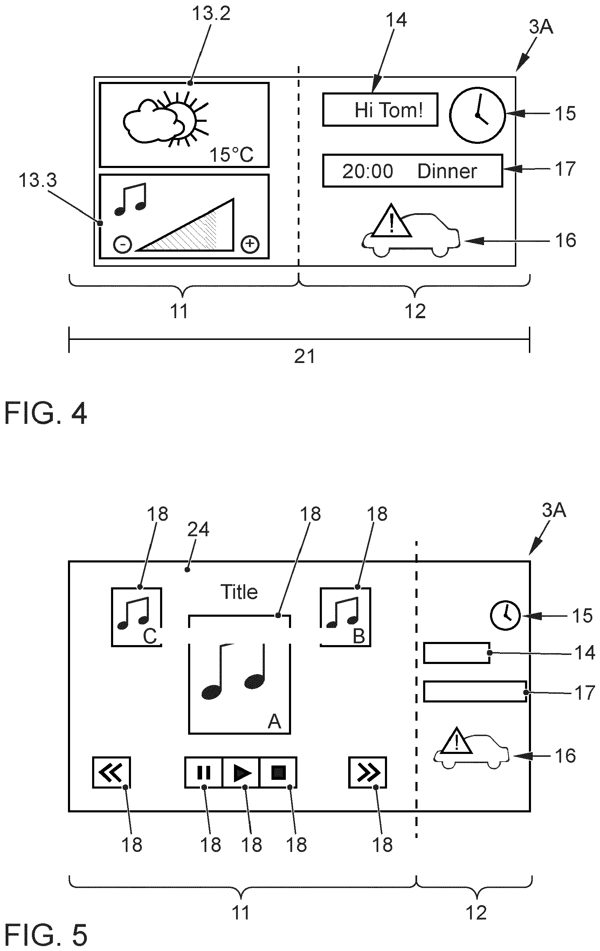

Mit Bezug zu Figur 4 wird ein Ausführungsbeispiel eines angezeigten ersten Ausschnitts einer virtuellen Bedienoberfläche erläutert. Dabei wird von dem oben mit Bezug zu den Figuren 1A und 1B erläuterten Ausführungsbeispiel der erfindungsgemäßen Anordnung in einem Fahrzeug ausgegangen. Ferner erfolgt die Erzeugung der virtuellen Bedienoberfläche analog zu den mit Bezug zu den Figuren 2A bis 2C sowie den Figuren 3A bis 3C beschriebenen Ausführungsbeispielen des erfindungsgemäßen Verfahrens.

Auf der Anzeigefläche 3a werden Elemente des Anwendungsbereichs 11 und des Informationsbereichs 12 ausgegeben. In dem Anwendungsbereich 11 sind zwei Widget-Objekte 13.2, 13.3 ausgebildet, die Ausgabedaten zugeordneten Anwendungsprogramme darstellen. Dies sind Anwendungsprogramme zur Wettervorhersage (oberes Widget-Objekt 13.2) und zur Ausgabe von Multimediainhalten (unteres Widget-Objekt 13.3). Dabei erlauben die Widget-Objekte 13.2 und 13.3 im Anwendungsbereich 11 eine Interaktion mit dem Nutzer, beispielsweise eine Steuerung einer Wiedergabelautstärke (unteres Widget-Objekt 13.3). In dem Informationsbereich 12 wird die aktuelle Uhrzeit mittels einer entsprechenden Anzeige 15 ausgegeben, deren Darstellungsart durch eine Benutzereingabe konfiguriert werden kann. Ferner wird eine Textnachricht 14 ausgegeben, im dargestellten Fall eine personalisierte Begrüßungsnachricht. Ferner ist in diesem beispielhaften Fall vorgesehen, dass eine Benachrichtigung eines Anwendungsprogramms ausgegeben wird, im dargestellten Fall der nächste Termin eines elektronischen Kalenders. In dem Informationsbereich 12 wird ferner eine Fahrzeugdarstellung 16 ausgegeben, wobei hier ein Status des Fahrzeugs angezeigt wird, insbesondere ein Hinweis auf eine Warnmeldung.

In einem weiteren Ausführungsbeispiel kann vorgesehen sein, dass die Fahrzeugdarstellung 16 dynamisch erfolgt, wobei insbesondere eine animierte Bewegung der Fahrzeugdarstellung 16 bei einer Annäherung eines Bedienobjekts an die berührungsempfindliche Oberfläche 3b des Touchscreens 3 ausgegeben wird. Insbesondere kann die Fahrzeugdarstellung 16 so erfolgen, dass die Fahrzeugdarstellung 16 an das tatsächliche Erscheinungsbild des Fahrzeugs 1 angepasst wird, beispielsweise anhand der Darstellung der Farbe oder der Radkappen. In weiteren Ausführungsbeispielen können alternativ oder zusätzlich andere Informationen ausgegeben werden, beispielsweise ein aktuelles Datum, eine Markenidentifikationsgrafik, etwa eine Marke, ein Logo, ein Hintergrundbild und/oder ein Dekorbild.

Insbesondere ist vorgesehen, dass in dem Informationsbereich 12 keine oder höchstens eine Schaltfläche angeordnet ist, das heißt, dass Interaktionsmöglichkeiten eines Nutzers mit der virtuellen Bedienoberfläche 10 im Informationsbereich 12 im Vergleich zu dem Anwendungsbereich 11 stark eingeschränkt sind.

Mit Bezug zu Figur 5 wird ein Ausführungsbeispiel einer für die erfindungsgemäße Anordnung erzeugten Anzeige erläutert. Dabei wird insbesondere von dem oben mit Bezug zu Figur 4 erläuterten Ausführungsbeispiel eines angezeigten ersten Ausschnitts einer virtuellen Bedienoberfläche ausgegangen.

Bei dem Ausführungsbeispiel ist vorgesehen, dass eine Vollbilddarstellung, wie sie in Figur 5 dargestellt ist, aufgerufen wird, indem ein Nutzer bei der in Figur 4 dargestellten Anzeige der virtuellen Bedienoberfläche 10 eines der in den Anwendungsbereich 11 ausgegebenen Widget-Objekte 13.2, 13.3 so betätigt, dass eine Vollbilddarstellung 24 der zugeordneten Anwendung, im dargestellten Fall eine Multimedia-Anwendung, aktiviert wird.

Die Vollbilddarstellung 24 umfasst Schaltflächen 18, durch die das Abspielen eines Musiktitels gesteuert sowie eine Auswahl eines abzuspielenden Musiktitels durch einen Nutzer ermöglicht wird. Die Vollbilddarstellung 24 erstreckt sich über den Anwendungsbereich 11, der bei dem Ausführungsbeispiel so gebildet ist, dass er vollständig innerhalb des Reichweitenbereichs 5 des Fahrzeugs 1 angeordnet ist. Rechts seitlich daneben, bei dem Ausführungsbeispiel außerhalb des Reichweitenbereichs 5, ist der Informationsbereich 12 angeordnet, der gegenüber in Figur 4 dargestellten Fall verkleinert ist, dessen Informationsgehalt jedoch gegenüber dem in Figur 4 dargestellten Fall im Wesentlichen gleich geblieben ist.

In einem weiteren Ausführungsbeispiel erstreckt sich die Vollbilddarstellung 24 über die gesamte Breite der dargestellten virtuellen Bedienoberfläche 10 und der Informationsbereich 12 ist beispielsweise in einem oberen Bereich der Anzeigefläche 3a angeordnet. Dabei kann insbesondere der Wechsel von dem in Figur 4 dargestellten Fall, bei dem die Ausgabe von Daten der Anwendungsprogramme anhand der Widget-Objekte 13.2, 13.3 erfolgt, zu der in Figur 5 dargestellten Vollbilddarstellung 24 auf verschiedene Weise gebildet werden, beispielsweise durch eine animierte Veränderung der Größe und/oder Anordnung des Erfassungsbereichs 12 sowie der darin ausgegebenen Informationsfunktionalitäten 14, 15, 16, 17.

In einem weiteren Ausführungsbeispiel kann vorgesehen sein, dass der Informationsbereich 12 als Vollbilddarstellung 24 auf der Anzeigefläche 3a ausgegeben werden kann. Dies kann beispielsweise automatisch oder anhand einer manuellen Aktivierung erfolgen.

### Bezugszeichenliste

- 1: Fahrzeug
- 2: Fahrzeugsitz; Fahrersitz
- 2a: Sitzposition
- 3: Touchscreen
- 3a: Anzeigefläche des Touchscreens
- 3b: Berührungsempfindliche Oberfläche des Touchscreens
- 4: Steuereinheit
- 5: Reichweitenbereich
- 6: Erster Teilbereich des Touchscreens
- 7: Zweiter Teilbereich des Touchscreens
- 8: Beifahrersitz
- 9: Bedienelement
- 10: Virtuelle Bedienoberfläche
- 11: Anwendungsbereich
- 12: Informationsbereich
- 13.1, 13.2, 13.3, 13.4: Schaltfläche; Widget-Objekt
- 14: Textnachricht (Anzeige)
- 15: Anzeige der Uhrzeit (Anzeige)
- 16: Fahrzeugdarstellung (Anzeige)
- 17: Benachrichtigung (Anzeige)
- 18: Schaltfläche
- 19: Anzeigebereiche
- 21: Erster Ausschnitt der virtuellen Bedienoberfläche
- 22: Zweiter Ausschnitt der virtuellen Bedienoberfläche
- 23: Gemeinsamer Bereich der virtuellen Bedienoberfläche
- 24: Vollbilddarstellung

## Patentansprüche

1. Fahrzeug (1) mit einer Anordnung einer grafischen Benutzerschnittstelle, umfassend
einen Fahrzeugsitz (2), dem ein Reichweitenbereich (5) zugeordnet ist;
einen Touchscreen (3), der relativ zu dem Fahrzeugsitz (2) so im Fahrzeug (1) angeordnet ist, dass ein erster Teilbereich (6) des Touchscreens (3) innerhalb des Reichweitenbereichs (5) und ein zweiter Teilbereich (7) außerhalb des Reichweitenbereichs (5) angeordnet ist; und
eine Steuereinheit (3), durch die eine virtuelle Bedienoberfläche (10) mit einem Anwendungsbereich (11) und einem Informationsbereich (12) erzeugbar ist; wobei
der Anwendungsbereich (11) zumindest eine Schaltfläche (13.1, 13.2, 13.3) aufweist, die einem Anwendungsprogramm zugeordnet ist;
**dadurch gekennzeichnet, dass**
die virtuelle Bedienoberfläche (10) so auf dem Touchscreen (3) ausgebbar ist, dass sich der Anwendungsbereich (11) im Wesentlichen über den ersten Teilbereich (6) des Touchscreens (3) erstreckt und der Informationsbereich (12) im Wesentlichen über den zweiten Teilbereich (7) des Touchscreens (3) erstreckt; wobei
bei der Ausgabe ein erster Ausschnitt (21) der virtuellen Bedienoberfläche (10) auf dem Touchscreen (3) anzeigbar ist;
eine Bedienhandlung erfassbar ist; und
in Abhängigkeit von der Bedienhandlung ein zweiter Ausschnitt (22) der virtuellen Bedienoberfläche (10) auf dem Touchscreen (3) ausgebbar ist; wobei
der Wechsel zwischen dem ersten (21) und dem zweiten Ausschnitt (22) durch eine Verschiebung der virtuellen Bedienoberfläche (10) relativ zu einer Anzeigefläche (3a) des Touchscreens (3) erfolgt, wobei sich der auf der Anzeigefläche (3a) ausgebbare Bereich der virtuellen Bedienoberfläche (10) verschiebt; und
der erste (21) und der zweite Ausschnitt (22) der virtuellen Bedienoberfläche (10) so gebildet sind, dass alle Teilabschnitte des Anwendungsbereichs (11) in dem ersten Teilbereich (6) des Touchscreens (3) anzeigbar sind.

2. Fahrzeug (1) gemäß Anspruch 1,
**dadurch gekennzeichnet, dass**
der Touchscreen (3) zwischen einem Fahrersitz (2) und einem Beifahrersitz (8) des Fahrzeugs (1) angeordnet ist und der Reichweitenbereich (5) anhand des Fahrersitzes (2) bestimmbar ist.

3. Fahrzeug (1) gemäß Anspruch 1 oder 2,
**dadurch gekennzeichnet, dass**
eine Auswahleingabe erfassbar ist und das der Schaltfläche (13.1, 13.2, 13.3) zugeordnete Anwendungsprogramm auswählbar ist.

4. Fahrzeug (1) gemäß einem der vorhergehenden Ansprüche,
**dadurch gekennzeichnet, dass**
dem Informationsbereich (12) eine Informationsfunktionalität zugeordnet ist, die anhand einer externen oder vorgegebenen Konfiguration gebildet wird.

5. Fahrzeug (1) gemäß einem der vorhergehenden Ansprüche,
**dadurch gekennzeichnet, dass**
eine Nutzeridentifikation erfassbar ist und der Informationsbereich (12) in Abhängigkeit von der Nutzeridentifikation erzeugbar ist.

6. Fahrzeug (1) gemäß Anspruch 5,
**dadurch gekennzeichnet, dass**
der Informationsbereich (12) eine Textnachricht (14) mit einem Namen eines Nutzers, eine Anzeige einer Uhrzeit (15) und/oder eine Fahrzeugdarstellung (16) umfasst.

7. Fahrzeug (1) gemäß Anspruch 5 oder 6,
**dadurch gekennzeichnet, dass**
anhand der Nutzeridentifikation Ausgabedaten eines Anwendungsprogramms gebildet werden und der Informationsbereich (12) eine Ausgabe der Ausgabedaten umfasst.

8. Fahrzeug (1) gemäß einem der vorhergehenden Ansprüche,
**dadurch gekennzeichnet, dass**
der zweite Ausschnitt (22) der virtuellen Bedienoberfläche (10) gegenüber dem ersten Ausschnitt (21) verschoben ist.

9. Fahrzeug (1) gemäß einem der vorhergehenden Ansprüche,
**dadurch gekennzeichnet, dass**
sich der Informationsbereich (12) über 1/3 bis 2/3 der Fläche des ersten Ausschnitts (21) der virtuellen Bedienoberfläche (10) erstreckt.

10. Fahrzeug (1) gemäß einem der vorhergehenden Ansprüche,
**dadurch gekennzeichnet, dass**
die virtuelle Bedienoberfläche (10) einen gemeinsamen Bereich (23) aufweist, der von dem ersten (21) und dem zweiten Ausschnitt (22) umfasst ist.

11. Fahrzeug (1) gemäß einem der vorhergehenden Ansprüche,
**dadurch gekennzeichnet, dass**
eine Aktivierungshandlung für ein Anwendungsprogramm erfassbar ist und
durch das Anwendungsprogramm erzeugbare Ausgabedaten in dem Anwendungsbereich (11) ausgebbar sind.

12. Verfahren zum Bereitstellen einer grafischen Benutzerschnittstelle in einem Fahrzeug (1) mit einem Fahrzeugsitz (2), einem Touchscreen (3) und einer Steuereinheit (4), wobei
dem Fahrzeugsitz (2) ein Reichweitenbereich (5) zugeordnet wird;
der Touchscreen (3) relativ zu dem Fahrzeugsitz (2) so im Fahrzeug (1) angeordnet ist, dass ein erster Teilbereich (6) des Touchscreens (3) innerhalb des Reichweitenbereichs (5) und ein zweiter Teilbereich (7) außerhalb des Reichweitenbereichs (5) angeordnet ist; und
durch die Steuereinheit (3) eine virtuelle Bedienoberfläche (10) mit einem Anwendungsbereich (11) und einem Informationsbereich (12) erzeugt wird; wobei
der Anwendungsbereich (11) zumindest eine Schaltfläche (13.1, 13.2, 13.3) aufweist, die einem Anwendungsprogramm zugeordnet ist;
**dadurch gekennzeichnet, dass**
die virtuelle Bedienoberfläche (10) so auf dem Touchscreen (3) ausgegeben wird, dass sich der Anwendungsbereich (11) im Wesentlichen über den ersten Teilbereich (6) des Touchscreens (3) erstreckt und der Informationsbereich (12) im Wesentlichen über den zweiten Teilbereich (7) des Touchscreens (3) erstreckt; wobei
bei der Ausgabe ein erster Ausschnitt (21) der virtuellen Bedienoberfläche (10) auf dem Touchscreen (3) angezeigt wird;
eine Bedienhandlung erfasst wird; und
in Abhängigkeit von der Bedienhandlung ein zweiter Ausschnitt (22) der virtuellen Bedienoberfläche (10) auf dem Touchscreen (3) ausgegeben wird; wobei
der Wechsel zwischen dem ersten (21) und dem zweiten Ausschnitt (22) durch eine Verschiebung der virtuellen Bedienoberfläche (10) relativ zu einer Anzeigefläche (3a) des Touchscreens (3) erfolgt, wobei sich der auf der Anzeigefläche (3a) ausgebbare Bereich der virtuellen Bedienoberfläche (10) verschiebt; und
der erste (21) und der zweite Ausschnitt (22) der virtuellen Bedienoberfläche (10) so gebildet sind, dass alle Teilabschnitte des Anwendungsbereichs (11) in dem ersten Teilbereich (6) des Touchscreens (3) anzeigbar sind.

13. Verfahren gemäß Anspruch 12,
**dadurch gekennzeichnet, dass**
eine Nutzeridentifikation erfasst wird und der Informationsbereich (12) in Abhängigkeit von der Nutzeridentifikation erzeugbar wird.

## Claims

1. Vehicle (1) having an arrangement of a graphical user interface, comprising
a vehicle seat (2) that has an associated reach area (5);
a touchscreen (3) arranged in the vehicle (1) relative to the vehicle seat (2) such that a first subarea (6) of the touchscreen (3) is arranged inside the reach area (5) and a second subarea (7) is arranged outside the reach area (5); and
a control unit (3) by means of which a virtual control surface (10) having an application area (11) and an information area (12) is producible; wherein
the application area (11) has at least one button (13.1, 13.2, 13.3) associated with an application program;
**characterized in that**
the virtual control surface (10) is outputtable on the touchscreen (3) such that the application area (11) extends substantially over the first subarea (6) of the touchscreen (3) and the information area (12) extends substantially over the second subarea (7) of the touchscreen (3); wherein
output results in a first segment (21) of the virtual control surface (10) being displayable on the touchscreen (3);
a control action is detectable; and
on the basis of the control action a second segment (22) of the virtual control surface (10) is outputtable on the touchscreen (3); wherein
the change between the first (21) and the second (22) segment is effected by means of a shift of the virtual control surface (10) relative to a display panel (3a) of the touchscreen (3), with the area of the virtual control surface (10) that is outputtable on the display panel (3a) moving; and
the first (21) and the second (22) segment of the virtual control surface (10) are formed such that all subsections of the application area (11) are displayable in the first subarea (6) of the touchscreen (3).

2. Vehicle (1) according to Claim 1,
**characterized in that**
the touchscreen (3) is arranged between a driver's seat (2) and a passenger seat (8) of the vehicle (1) and the reach area (5) is determinable on the basis of the driver's seat (2).

3. Vehicle (1) according to Claim 1 or 2,
**characterized in that**
a selection input is detectable and the application program associated with the button (13.1, 13.2, 13.3) is selectable.

4. Vehicle (1) according to one of the preceding claims,
**characterized in that**
the information area (12) has an associated information functionality that is formed on the basis of an external or prescribed configuration.

5. Vehicle (1) according to one of the preceding claims,
**characterized in that**
a user identification is detectable and the information area (12) is producible on the basis of the user identification.

6. Vehicle (1) according to Claim 5,
**characterized in that**
the information area (12) comprises a text message (14) having a name of a user, comprises a display of a time (15) and/or comprises a vehicle representation (16).

7. Vehicle (1) according to Claim 5 or 6,
**characterized in that**
the user identification is used to form output data of an application program, and the information area (12) comprises an output of the output data.

8. Vehicle (1) according to one of the preceding claims,
**characterized in that**
the second segment (22) of the virtual control surface (10) is shifted in comparison with the first segment (21).

9. Vehicle (1) according to one of the preceding claims,
**characterized in that**
the information area (12) extends over 1/3 to 2/3 of the surface area of the first segment (21) of the virtual control surface (10).

10. Vehicle (1) according to one of the preceding claims,
**characterized in that**
the virtual control surface (10) has a common area (23) comprised of the first (21) and the second (22) segment.

11. Vehicle (1) according to one of the preceding claims,
**characterized in that**
an activation action for an application program is detectable and output data producible by the application program are outputtable in the application area (11).

12. Method for providing a graphical user interface in a vehicle (1) having a vehicle seat (2), a touchscreen (3) and a control unit (4), wherein
the vehicle seat (2) is assigned a reach area (5);
the touchscreen (3) is arranged in the vehicle (1) relative to the vehicle seat (2) such that a first subarea (6) of the touchscreen (3) is arranged inside the reach area (5) and a second subarea (7) is arranged outside the reach area (5); and
the control unit (3) produces a virtual control surface (10) having an application area (11) and an information area (12); wherein
the application area (11) has at least one button (13.1, 13.2, 13.3) associated with an application program,
**characterized in that**
the virtual control surface (10) is output on the touchscreen (3) such that the application area (11) extends substantially over the first subarea (6) of the touchscreen (3) and the information area (12) extends substantially over the second subarea (7) of the touchscreen (3); wherein
output results in a first segment (21) of the virtual control surface (10) being displayed on the touchscreen (3);
a control action is detected; and
on the basis of the control action a second segment (22) of the virtual control surface (10) is output on the touchscreen (3); wherein
the change between the first (21) and the second (22) segment is effected by means of a shift of the virtual control surface (10) relative to a display panel (3a) of the touchscreen (3), with the area of the virtual control surface (10) that is outputtable on the display panel (3a) moving; and
the first (21) and the second (22) segment of the virtual control surface (10) are formed such that all subsections of the application area (11) are displayable in the first subarea (6) of the touchscreen (3).

13. Method according to Claim 12,
**characterized in that**
a user identification is detected and the information area (12) becomes producible on the basis of the user identification.

## Revendications

1. Véhicule (1) ayant un arrangement d'une interface utilisateur graphique, comprenant
un siège de véhicule (2) auquel est associée une zone de portée (5) ;
un écran tactile (3) qui est disposé dans le véhicule (1) par rapport au siège de véhicule (2) de telle sorte qu'une première zone partielle (6) de l'écran tactile (3) est disposée à l'intérieur de la zone de portée (5) et une deuxième zone partielle (7) à l'extérieur de la zone de portée (5) ; et
une unité de commande (3) par laquelle peut être générée une interface d'opération (10) virtuelle ayant une zone d'application (11) et une zone d'information (12) ;
la zone d'application (11) possédant au moins un bouton (13.1, 13.2, 13.3) auquel est associé un programme d'application ;
**caractérisé en ce que**
l'interface d'opération (10) virtuelle peut être diffusée sur l'écran tactile (3) de telle sorte que la zone d'application (11) s'étend sensiblement sur la première zone partielle (6) de l'écran tactile (3) et la zone d'information (12) s'étend sensiblement sur la deuxième zone partielle (7) de l'écran tactile (3) ;
lors de la diffusion, une première tranche (21) de l'interface d'opération (10) virtuelle pouvant être diffusée sur l'écran tactile (3) ;
une manipulation d'opération pouvant être détectée ; et
une deuxième tranche (22) de l'interface d'opération (10) virtuelle pouvant être diffusée sur l'écran tactile (3) en fonction de la manipulation d'opération ;
le changement entre la première (21) et la deuxième tranche (22) s'effectuant par un décalage de l'interface d'opération (10) virtuelle par rapport à une surface d'affichage (3a) de l'écran tactile (3), la zone de l'interface d'opération (10) virtuelle diffusable sur la surface d'affichage (3a) se décalant ; et
la première (21) et la deuxième tranche (22) de l'interface d'opération (10) virtuelle étant formées de telle sorte que toutes les portions partielles de la zone d'application (11) peuvent être affichées dans la première zone partielle (6) de l'écran tactile (3).

2. Véhicule (1) selon la revendication 1, **caractérisé en ce que** l'écran tactile (3) est disposé entre un siège de conducteur (2) et un siège de passager (8) du véhicule (1) et la zone de portée (5) peut être déterminée à l'aide du siège de conducteur (2).

3. Véhicule (1) selon la revendication 1 ou 2, **caractérisé en ce qu'**une saisie de sélection peut être détectée et le programme d'application associé au bouton (13.1, 13.2, 13.3) peut être sélectionné.

4. Véhicule (1) selon l'une des revendications précédentes, **caractérisé en ce qu'**une fonctionnalité d'information est associée à la zone d'information (12), laquelle est formée à l'aide d'une configuration externe ou prédéfinie.

5. Véhicule (1) selon l'une des revendications précédentes, **caractérisé en ce qu'**une identification d'utilisateur peut être détectée et la zone d'information (12) peut être générée en fonction de l'identification d'utilisateur.

6. Véhicule (1) selon la revendication 5, **caractérisé en ce que** la zone d'information (12) comporte un message textuel (14) avec un nom d'un utilisateur, un affichage d'une heure (15) et/ou une représentation de véhicule (16) .

7. Véhicule (1) selon la revendication 5 ou 6, **caractérisé en ce que** des données de sortie d'un programme d'application sont formées à l'aide de l'identification d'utilisateur et la zone d'information (12) comprend une édition des données de sortie.

8. Véhicule (1) selon l'une des revendications précédentes, **caractérisé en ce que** la deuxième tranche (22) de l'interface d'opération (10) virtuelle est décalée par rapport à la première tranche (21).

9. Véhicule (1) selon l'une des revendications précédentes, **caractérisé en ce que** la zone d'information (12) s'étend sur 1/3 à 2/3 de la surface de la première tranche (21) de l'interface d'opération (10) virtuelle.

10. Véhicule (1) selon l'une des revendications précédentes, **caractérisé en ce que** l'interface d'opération (10) virtuelle possède une zone commune (23) qui est englobée par la première (21) et la deuxième tranche (22).

11. Véhicule (1) selon l'une des revendications précédentes, **caractérisé en ce qu'**une manipulation d'activation pour un programme d'application peut être détectée et les données de sortie pouvant être générées par le programme d'application peuvent être diffusées dans la zone d'application (11).

12. Procédé de fourniture d'une interface utilisateur graphique dans un véhicule (1) comprenant un siège de véhicule (2), un écran tactile (3) et une unité de commande (4),
une zone de portée (5) étant associée au siège de véhicule (2) ;
l'écran tactile (3) étant disposé dans le véhicule (1) par rapport au siège de véhicule (2) de telle sorte qu'une première zone partielle (6) de l'écran tactile (3) est disposée à l'intérieur de la zone de portée (5) et une deuxième zone partielle (7) à l'extérieur de la zone de portée (5) ; et
une interface d'opération (10) virtuelle ayant une zone d'application (11) et une zone d'information (12) étant générée par l'unité de commande (3) ;
la zone d'application (11) possédant au moins un bouton (13.1, 13.2, 13.3) auquel est associé un programme d'application ;
**caractérisé en ce que**
l'interface d'opération (10) virtuelle peut être diffusée sur l'écran tactile (3) de telle sorte que la zone d'application (11) s'étend sensiblement sur la première zone partielle (6) de l'écran tactile (3) et la zone d'information (12) s'étend sensiblement sur la deuxième zone partielle (7) de l'écran tactile (3) ;
lors de la diffusion, une première tranche (21) de l'interface d'opération (10) étant diffusée sur l'écran tactile (3) ;
une manipulation d'opération étant détectée ; et
une deuxième tranche (22) de l'interface d'opération (10) virtuelle étant diffusée sur l'écran tactile (3) en fonction de la manipulation d'opération ;
le changement entre la première (21) et la deuxième tranche (22) s'effectuant par un décalage de l'interface d'opération (10) virtuelle par rapport à une surface d'affichage (3a) de l'écran tactile (3), la zone de l'interface d'opération (10) virtuelle diffusable sur la surface d'affichage (3a) se décalant ; et
la première (21) et la deuxième tranche (22) de l'interface d'opération (10) virtuelle étant formées de telle sorte que toutes les portions partielles de la zone d'application (11) peuvent être affichées dans la première zone partielle (6) de l'écran tactile (3).

13. Procédé selon la revendication 12, **caractérisé en ce qu'**une identification d'utilisateur est détectée et la zone d'information (12) peut être générée en fonction de l'identification d'utilisateur.
